# EUROPÄISCHE PATENTSCHRIFT

(11) **EP 4 016 768 B1**
(45) Veröffentlichungstag und Bekanntmachung des Hinweises auf die Patenterteilung: **08.03.2023**
(21) Anmeldenummer: 21213329.2
(22) Anmeldetag: 09.12.2021
(51) Int. Cl.: H02G 1/12, B23K 26/402, B23K 26/40

(54) **VERFAHREN UND VORRICHTUNG ZUM SCHNEIDEN UND/ODER ABTRAGEN VON SCHICHTEN EINES KABELS**
METHOD AND DEVICE FOR CUTTING AND / OR REMOVING LAYERS OF A CABLE
PROCÉDÉ ET DISPOSITIF DE COUPE ET/OU D'ENLÈVEMENT DES COUCHES D'UN CÂBLE

(30) Priorität: 21.12.2020 DE 102020134396
(43) Veröffentlichungstag der Anmeldung: 22.06.2022
(73) Patentinhaber: MD Elektronik GmbH, 84478 Waldkraiburg (DE)
(72) Erfinder: Mannherz, Herbert, 76703 Kaichtal (DE)

(56) Entgegenhaltungen:
- EP-A1- 1 228 834
- JP-A- 2012 110 112
- US-A- 4 671 848

## Beschreibung

### Technisches Gebiet

Die Erfindung betrifft ein Verfahren sowie eine Vorrichtung zum Schneiden und/oder Abtragen von Schichten eines Kabels, insbesondere eines µ-Koaxialkabels.

### Stand der Technik

Koaxialkabel sind geschirmte Leitungen mit einem mehrschichtigen Aufbau, um elektrische oder optische Signale möglichst störungsfrei von einem Kabelende zum anderen Kabelende zu führen. Der Aufbau eines Koaxialkabels weist im Wesentlichen einen Innenleiter, ein den Innenleiter umgebendes Dielektrikum, eine Abschirmschicht und eine äußere Schutzschicht auf. Der Innenleiter ist, je nach Signal, ein elektrisch oder optisch leitfähiges Material. Das den Innenleiter umgebende Dielektrikum ist eine elektrisch oder optisch nicht-leitfähige Schicht, um den Innenleiter radial nach außen zu isolieren. Bevorzugt kann die nicht-leitfähige Schicht die Leitungseigenschaften des Innenleiters noch verbessern. Die Abschirmschicht weist häufig ein Schirmgeflecht auf, durch das das Signal im Innenleiter, insbesondere elektromagnetisch, von der Außenwelt abgeschirmt ist. Bevorzugt ist das Schirmgeflecht ein metallisches Geflecht aus miteinander verwobenen Litzen. Die äußere Schutzschicht schützt die Abschirmschicht und die darunter liegenden Schichten vor äußeren Einflüssen, so dass deren Struktur und Eigenschaften nicht beeinträchtig werden. Die äußere Schutzschicht ist bevorzugt aus einem Kunststoff hergestellt. In manchen Ausführungsformen ist die äußere Schutzschicht aus einem metallischen Stoff aufgebaut. Der Durchmesser des Innenleiters und die Dicke der Schichten kann von wenigen µm, z.B. bei µ-Koaxialkabeln, bis zu einigen mm betragen.

Die Kabelkonfektionierung ist die Herstellung von anschlussfertigen Kabeln. Ein Kabel wird konfektioniert, indem ein Anschlusselement, wie ein Stecker, ein Kontakt und/oder eine Hülse, an zumindest ein freies Ende eines Kabels angebracht wird. Für die Kabelkonfektionierung ist es notwendig, dass eine oder mehrere Schichten eines mehrschichtigen Kabels in bestimmten Abschnitten des Kabels entfernt werden. Im Stand der Technik wird das Schneiden bzw. Abtragen von Schichten eines Kabels mit Hilfe unterschiedlicher Verfahren durchgeführt. Gängige Verfahren sind das Schneiden mit einem Messer, Laserschneiden über Spiegel und/oder mit drehender Optik, oder Zerspannungsverfahren bei einer äußeren Metallschicht.

Die genannten Verfahren weisen, insbesondere bei µ-Koaxialkabeln aufgrund der geringen Schichtdicken, Nachteile auf. Beim Schneiden mit einem Messer kann es zu Schädigungen bzw. Verformungen von darunter liegenden Schichten kommen. Die Schädigungen bzw. Verformungen können durch Eindringen bzw. Quetschen mit dem Messer verursacht werden. Beim Laserschneiden über Spiegel und/oder mit drehender Optik kann es vorkommen, dass die Laserenergie direkt oder indirekt in darunter liegende Schichten einwirkt. In den darunter liegenden Schichten kann der Energieeintrag zu ungewollten Verformungen führen. Insbesondere wird der Laserstrahl bei herkömmlichen Verfahren, durch direkte Bestrahlung oder Umlenkung mit Hilfe von Spiegelsystemen, auf die Mittelachse des Kabels gelenkt, und führt dabei zu einem Energieeintrag in mehreren Schichten gleichzeitig. Beim Zerspannen besteht die Gefahr der Schädigung des Kabels zum Beispiel durch Exzentrizität, Wegdrücken, Einhaken und/oder durch Einflüsse von entstehenden Metallspänen. Insbesondere ist das Ergebnis bei den genannten Verfahren abhängig vom Abschirmungsfaktor der darunter liegenden Schichten, dem Transmissions- bzw. Absorptionsgrad der darunter liegenden Schichten und/ oder der Dichtheit der Schirmdrähte.

Die Druckschrift JP 2012 110 112 A beschreibt ein Abschirmungsschneideverfahren für ein geschirmtes Kabel. Bei dem Abschirmungsschneideverfahren wird die Schutzschicht in einem Abschnitt entfernt und die Abschirmung in diesem Abschnitt freigelegt. Der Abschirmungsdurchmesser wird von beiden Seiten des freigelegten Abschnitts der Abschirmung in axialer Richtung vergrößert, so dass die Abschirmung in dem freigelegten Abschnitt angehoben wird. Der Abschirmungsdurchmesser wird vergrößert, so dass der Abschirmungsdurchmesser des freigelegten Abschnitts gegenüber dem Abschirmungsdurchmesser des nicht-freigelegten Abschnitts größer ist. Der vergrößerte Abschnitt des Abschirmungsdurchmesser wird durch Laserlichtbestrahlung geschnitten.

Um den Abschirmungsdurchmesser zu vergrößern wird das Kabel in axialer Richtung gestaucht. Eine Stauchung bzw. mechanische Verformung eines geschirmten Kabels führt in der Regel zumindest zu Veränderungen und Nachteilen bei der Signalleitung und sollte vermieden werden.

Die Druckschrift US 4 671 848 A offenbart eine Vorrichtung und ein Verfahren zum Abtrag einer isolierenden Schicht von einem leitenden Material mit Hilfe eines Laserstrahls.

### Beschreibung der Erfindung

Es ist daher eine Aufgabe der vorliegenden Erfindung ein Verfahren und eine Vorrichtung bereitzustellen, die geeignet sind einzelne Schichten eines Kabels abzutragen ohne darunter liegende Schichten mechanische zu beanspruchen oder zu schädigen.

Die oben genannte Aufgabe wird durch ein Verfahren zum Schneiden und/oder Abtragen von Schichten eines Kabels nach Anspruch 1, sowie eine Vorrichtung zum Schneiden und/oder Abtragen von Schichten eines Kabels nach Anspruch 7 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch ein Verfahren zum Schneiden und/oder Abtragen von Schichten eines Kabels. Wobei das Kabel zumindest einen Innenleiter, eine erste Schicht, die den Innenleiter umschließt, eine zweite Schicht, die die erste Schicht umschließt, und eine dritte Schicht, die die zweite Schicht umschließt und nach Außen freiliegt, aufweist. Wobei das Verfahren die folgenden Schritte aufweist: Erzeugen eines ersten Laserstrahls, Ausrichten des ersten Laserstrahls in einer Ebene senkrecht und quer zu einer Mittelachse des Kabels, so dass der erste Laserstrahl in der Ebene eine Passante zum Kabel bildet, Verschieben des ersten Laserstrahls um eine erste Länge in Richtung der Mittelachse des Kabels bis zu einem ersten Schichtgrenzpunkt zwischen der dritten und der zweiten Schicht, wobei der erste Laserstrahl eine hohe Absorption in der dritten Schicht und eine niedrige Absorption in der zweiten Schicht aufweist, und Drehen des Kabels, während dem Schritt des Verschiebens des ersten Laserstrahls, in einer ersten Drehrichtung um die Mittelachse des Kabels.

Der Aufbau des Kabels mit einem Innenleiter und zumindest drei radial sukzessive umschließenden Schichten ist weit verbreitet. Besonders vorteilhaft ist dabei ein Aufbau aus abwechselnden Kunststoff- und Metallschichten. In alternativen Ausführungsformen kann ein Kabel weitere Schichten aufweisen, zum Beispiel eine zusätzliche Metallfolie. Die Schichtdicken können untereinander verschieden sein. Dickere Schichten verstärken in der Regel den schützenden oder abschirmenden Charakter einer Schicht. Je dicker eine Schicht ist, desto mehr Energie muss vom Laser aufgewendet werden, um die Schicht zu entfernen.

Dadurch, dass der Laserstrahl in Kontakt mit dem Kabel als Tangente zur äußeren Schicht bzw. dem Kabel ausgerichtet ist, wirkt der Laserstrahl nur außerhalb der Kabelmitte. Die zu bearbeitende, d.h. zu entfernende, Schicht wird lediglich seitlich mit dem Laserlicht bestrahlt. Nach dem Durchtritt des Laserstrahls durch die zu entfernende Schicht, läuft der Laserstrahl frei nach unten aus. Es findet kein ungewollter Energieeintrag des Laserstrahls in Schichten statt, die radial unterhalb der zu entfernenden Schicht liegen. Die Verschiebung in Richtung Mittelachse des Kabels findet bevorzugt linear in der Ebene senkrecht und quer zur Längsachse des Kabels statt. Die Schichtgrenzpunkte sind insbesondere tangentiale Punkte für einen Laserstrahl an der Grenze zwischen zwei benachbarten Schichten.

Darüber hinaus ist die Eigenschaft des ersten Laserstrahls an das Material der zu bearbeitenden bzw. entfernenden Schicht angepasst. Insbesondere sind Parameter des ersten Laserstrahls so gewählt, dass der erste Laserstrahl eine physikalische Reaktion in der dritten Schicht auslöst, während er die direkt darunter liegende zweite Schicht ohne Wechselwirkung durchläuft. Die zweite Schicht ist quasi transparent oder reflektierend für den ersten Laserstrahl. Wenn der erste Laserstrahl demnach bei der Bearbeitung bzw. Entfernung der dritten Schicht an oder in die Nähe des ersten Schichtgrenzpunkts zwischen der dritten und der zweiten Schicht gelangt, wirkt die Energie des ersten Laserstrahls in der noch verbliebenen dritten Schicht, jedoch nicht in der zweiten Schicht. Dies ermöglicht eine vollständige Entfernung der dritten Schicht, da der erste Laserstrahl bis an den ersten Schichtgrenzpunkt herangefahren werden kann, ohne die zweite Schicht zu beeinflussen. In bevorzugten Ausführungsformen gilt dies auch für die entsprechende Bearbeitung weiterer Schichten.

Wird das Kabel gedreht, während der Laserstrahl gleichzeitig von außen in Richtung Mittelachse des Kabels bewegt wird, so schneidet sich der Laserstrahl umfänglich durch die zu entfernende Schicht. Beim sogenannten Laserschneiden wird das zu entfernende Material zum Beispiel aufgeschmolzen, verbrannt, verdampft, und/oder sublimiert. Umgangssprachlich kann man sagen, dass sich der Laserstrahl durch das zu entfernende Material fräst. Durch das Drehen des Kabels wird die dritte Schicht vollumfänglich abgetragen. In einer alternativen Ausführungsform kann das Drehen auch nach dem Verschieben erfolgen. Im Ergebnis entsteht ein ringförmiger Schnitt durch die dritte Schicht. Das Drehen umfasst zumindest eine volle Umdrehung des Kabels um seine Mittelachse.

Bevorzugt weist das Verfahren im Anschluss an die vorherigen Schritte weiterhin die Schritte auf: Erzeugen eines zweiten Laserstrahls, Ausrichten des zweiten Laserstrahls gemäß dem ersten Laserstrahl am ersten Schichtgrenzpunkt, Verschieben des zweiten Laserstrahls in Richtung der Mittelachse des Kabels bis zu einem weiteren Schichtgrenzpunkt zwischen der zweiten Schicht und der ersten Schicht, wobei der zweite Laserstrahl eine hohe Absorption in der zweiten Schicht und eine niedrige Absorption in der ersten Schicht aufweist, und Drehen des Kabels, während dem Schritt des Verschiebens des zweiten Laserstrahls, in der ersten oder einer zweiten Drehrichtung um die Mittelachse des Kabels.

Um die zweite Schicht des Kabels zu entfernen, die radial direkt unter der dritten Schicht liegt, kann der erste Laserstrahl nicht verwendet werden, da für den ersten Laserstrahl die zweite Schicht transparent oder reflektierend ist. Ein zweiter Laserstrahl wird verwendet, um die zweite Schicht zu entfernen. Der zweite Laserstrahl wird, wie der erste Laserstrahl, in dem ersten Schichtgrenzpunkt ausgerichtet. Dabei ist die Eigenschaft des zweiten Laserstrahls an das Material der zu bearbeitenden bzw. zu entfernenden Schicht angepasst. Insbesondere sind Parameter des zweiten Laserstrahls so gewählt, dass der zweite Laserstrahl eine physikalische Reaktion in der zweiten Schicht auslöst, während er die direkt darunter liegende erste Schicht ohne Wechselwirkung durchläuft. Die erste Schicht ist quasi transparent oder reflektierend für den zweiten Laserstrahl. Die zweite Drehrichtung ist bevorzugt entgegengesetzt zu der ersten Drehrichtung.

Bevorzugt weist das Verfahren im Anschluss an die vorherigen Schritte weiterhin die Schritte auf: Erzeugen des ersten Laserstrahls, Ausrichten des ersten Laserstrahls gemäß dem zweiten Laserstrahl an dem weiteren Schichtgrenzpunkt, Verschieben des ersten Laserstrahls in Richtung der Mittelachse des Kabels bis zu einem inneren Schichtgrenzpunkt zwischen der ersten Schicht und dem Innenleiter, wobei der erste Laserstrahl eine hohe Absorption in der ersten Schicht und eine niedrige Absorption in dem Innenleiter aufweist, und Drehen des Kabels, während dem Schritt des Verschiebens des ersten Laserstrahls, in die erste oder zweite Drehrichtung um die Mittelachse des Kabels.

Um die erste Schicht des Kabels zu entfernen, die radial direkt unter der zweiten Schicht liegt, kann der zweite Laserstrahl nicht verwendet werden, da für den zweiten Laserstrahl die erste Schicht transparent oder reflektierend ist. Der erste Laserstrahl wird verwendet, um die erste Schicht zu entfernen. Der erste Laserstrahl wird, wie der zweite Laserstrahl, in dem inneren Schichtgrenzpunkt ausgerichtet. Dabei ist die Eigenschaft des ersten Laserstrahls an das Material der zu entfernenden Schicht angepasst. Insbesondere sind Parameter des ersten Laserstrahls so gewählt, dass der erste Laserstrahl eine physikalische Reaktion in der ersten Schicht auslöst, während er den direkt darunter liegenden Innenleiter bzw. Teile davon ohne Wechselwirkung durchläuft. Der Innenleiter ist quasi transparent oder reflektierend für den ersten Laserstrahl.

Bevorzugt weist das Verfahren weiterhin den Schritt auf: Verschieben des ersten und/oder zweiten Laserstrahls um eine zweite Länge in Längsrichtung des Kabels. Durch das Verschieben entlang der Mittelachse wird das Material einer Schicht flächig abgetragen. Die zu entfernende Schicht ist im Ergebnis in einem bestimmten Abschnitt um die zweite Länge vollständig von dem Kabel entfernt. Der Abschnitt kann bevorzugt an einem Kabelende liegen oder in einer alternativen Ausführungsform zwischen zwei Kabelenden. Das flächige Abtragen kann in einem Abschnitt auf eine oder mehrere übereinanderliegende Schichten angewendet werden.

Bevorzugt verläuft bei dem Verfahren die erste und/oder zweite Drehrichtung in Gleichlauf mit einer Laserstrahlrichtung, wenn die Schicht einen Kunststoff aufweist, und verläuft in Gegenlauf mit der Laserstrahlrichtung, wenn die Schicht ein Metall aufweist, wobei die zweite Drehrichtung bevorzugt entgegen der ersten Drehrichtung ist. Bei der Schicht handelt es sich um die aktuell zu bearbeitende oder zu entfernende Schicht. Wenn die Drehrichtung des Kabels mit der Laserstrahlrichtung in Gleichlauf ist, dann kommt es bei zu entfernenden Kunststoffschichten zu einer Art Anschmelzen der Kunststoffschicht an der Schnittkante, was zu einer sehr gleichmäßigen Schnittkante führt. Wenn die Drehrichtung des Kabels mit der Laserstrahlrichtung in Gegenlauf ist, dann kommt es bei zu entfernenden Metallschichten zu einem Wegdrücken von gelösten Partikeln, was zu einer sehr gleichmäßigen Schnittkante führt.

Bevorzugt ist das Kabel ein µ-Koaxialkabel. Ein µ-Koaxialkabel weist sehr geringe Schichtdicken, insbesondere im unteren µm Bereich auf. Eine mechanische Bearbeitung der dünnen Schichten ist kompliziert, da oft darunter liegende Schichten mit beschädigt werden. Es ist vorteilhaft, dass aufgrund der dünnen Schichten wenig Laserenergie notwendig ist, um die Schichten zu bearbeiten bzw. zu entfernen.

Die oben genannte Aufgabe wird weiterhin insbesondere gelöst durch eine Vorrichtung zum Schneiden und/oder Abtragen von Schichten eines Kabels, wobei das Kabel zumindest einen Innenleiter, eine erste Schicht, die den Innenleiter umschließt, eine zweite Schicht, die die erste Schicht umschließt, und eine dritte Schicht, die die zweite Schicht umschließt und nach Außen freiliegt, aufweist, aufweisend: einen Laser zum Erzeugen eines ersten Laserstrahls, zumindest eine Laserstrahlquelle, die eingerichtet ist, den ersten Laserstrahl so bereitzustellen, dass der erste Laserstrahl in einer Ebene senkrecht und quer zu einer Mittelachse des Kabels beabstandet von einer Außenseite des Kabels ausrichtbar und in Richtung der Mittelachse des Kabels verschiebbar ist, wobei der erste Laserstrahl einen hohen Absorptionsgrad in einer Kunststoffschicht und einen niedrigen Absorptionsgrad in einer Metallschicht, oder einen hohen Absorptionsgrad in einer Metallschicht und einen niedrigen Absorptionsgrad in einer Kunststoffschicht aufweist.

Eine Ausrichtung und Bewegung des Laserstrahls seitlich am Kabel verhindert ein Eindringen des Laserstrahls in tiefere Schichten als der aktuell zu bearbeitenden bzw. zu entfernenden Schicht. Die Eigenschaft des Laserstrahls, dass er in zueinander angrenzenden Schichten des Kabels unterschiedliche und/oder gegensätzliche Absorptionsgrade aufweist, verhindert zudem ein ungewolltes Einwirken der Laserenergie in beiden Schichten gleichzeitig, insbesondere in den Schichten mit niedrigem Absorptionsgrad.

Bevorzugt umfasst der Laser einen ersten Laser oder einen dritten Laser, insbesondere einen Ultrakurzpulslaser, mit einer ersten Einstellung.

Bevorzugt weist die Vorrichtung weiterhin einen zweiten Laser, oder den dritten Laser mit einer zweiten Einstellung, zum Erzeugen eines zweiten Laserstrahls auf, wobei der zweite Laserstrahl wie der erste Laserstrahl ausrichtbar und verschiebbar ist, und umgekehrte Absorptionsgrade zu dem ersten Laserstrahl aufweist. Insbesondere weist die Vorrichtung zumindest einen zweiten Laser, oder den dritten Laser mit zumindest einer zweiten Einstellung, auf. Umgekehrte Absorptionsgrade bedeutet, dass wenn der erste Laserstrahl zum Beispiel eine niedrige Absorption in einer Kunststoffschicht aufweist und somit der Kunststoff für den ersten Laserstrahl transparent oder reflektierend ist, der zweite Laserstrahl eine hohe Absorption in dem Kunststoff aufweist, und der zweite Laserstrahl den Kunststoff somit bei Bestrahlung bearbeiten bzw. entfernen kann. Die Absorptionsgrade werden bevorzugt in hohe und niedrige Absorptionsgrade unterteilt. Insbesondere weisen hohe Absorptionsgrade eine Absorption der Laserenergie im Bereich von 80 bis 100 % auf. Weiterhin weisen insbesondere niedrige Absorptionsgrade eine Absorption der Laserenergie im Bereich von 0 bis 25 % auf. Durch die unterschiedlichen Absorptionsgrade, je nach Materialschicht, wird sichergestellt, dass immer nur eine bestimmte Schicht mit dem aktuell verwendeten Laser bearbeitet bzw. entfernt wird. Durch den Einsatz von zumindest zwei verschiedenen Lasern, oder einem Laser mit zwei verschiedenen Einstellungen, können in einer Ausführungsform alle Schichten eines Kabels einzeln abgetragen werden.

Die Verwendung eines Ultrakurzpulslasers (UKP-Laser) hat den Vorteil, dass nur ein Laser verwendet wird, um den ersten und/oder zweiten Laserstrahl zu erzeugen. Die Materialabhängigkeit des ersten bzw. zweiten Laserstrahls wird im Wesentlichen durch die Pulsdauer und/oder Wiederholrate der Laserpulse gesteuert. Daneben hat ein UKP-Laser insbesondere gegenüber konventionellen Lasern den Vorteil, dass keine oder kaum thermische Prozesse in dem zu bearbeitenden Material auftreten. Die thermischen Prozesse führen in der Regel zu ungewollten Erwärmungen der Materialien. Darüber hinaus kann durch einen Wärmefluss eine Weiterleitung der Energie in tiefer-liegende Schichten erfolgen. Die Dauer eines Laserpulses bei einem UKP-Laser liegt im Pico- oder Femtosekundenbereich, während die Dauer bei konventionellen Lasern üblicherweise im Nano- oder Millisekundenbereich liegt.

Bevorzugt weist die Laserstrahlquelle eine Optik mit einem Bearbeitungskopf oder einem Scannerkopf auf, wobei die Optik weiterhin so eingerichtet ist, dass der Laserstrahl entlang der Mittelachse des Kabels verschiebbar ist. Der Bearbeitungs- oder Scannerkopf ermöglicht die Ausrichtung des Laserstrahls von der Laserstrahlquelle, ohne den Laser an sich zu bewegen. Ortsfeste Laser vereinfachen das System. Der Bearbeitungskopf eignet sich insbesondere für UKP-Laser, da keine Spiegel verwendet werden. Ein Scannerkopf ermöglicht insbesondere eine schnelle Bewegung des Laserstrahls, da das optische System des Scannerkopfes geringe Trägheit aufweist.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigt:
- Fig. 1: eine schematische Darstellung einer Ausführungsform von Verfahrensschritten und einer Vorrichtung zum Schneiden und/oder Abtragen von Schichten eines Kabels;
- Fig. 2a: eine perspektivische Ansicht einer schematischen Darstellung eines Verfahrensschritts zum Schneiden einer Schicht mit einer ersten Drehrichtung des Kabels;
- Fig. 2b: eine Querschnittsansicht der schematischen Darstellung aus Fig. 2a;
- Fig. 3a: eine perspektivische Ansicht einer schematischen Darstellung eines Verfahrensschritts zum Schneiden einer Schicht mit einer zweiten Drehrichtung des Kabels;
- Fig. 3b: eine Querschnittsansicht der schematischen Darstellung aus Fig. 3a;
- Fig. 4a: eine perspektivische Ansicht einer schematischen Darstellung mit einer Abfolge von Verfahrensschritten zum flächigen Abtragen einer Schicht;
- Fig. 4b: eine Querschnittsansicht der schematischen Darstellung aus Fig. 4a; und
- Fig. 5a, b: ein Kabel, bei dem mit einer Ausführungsform des Verfahrens Schichten abgetragen wurden.

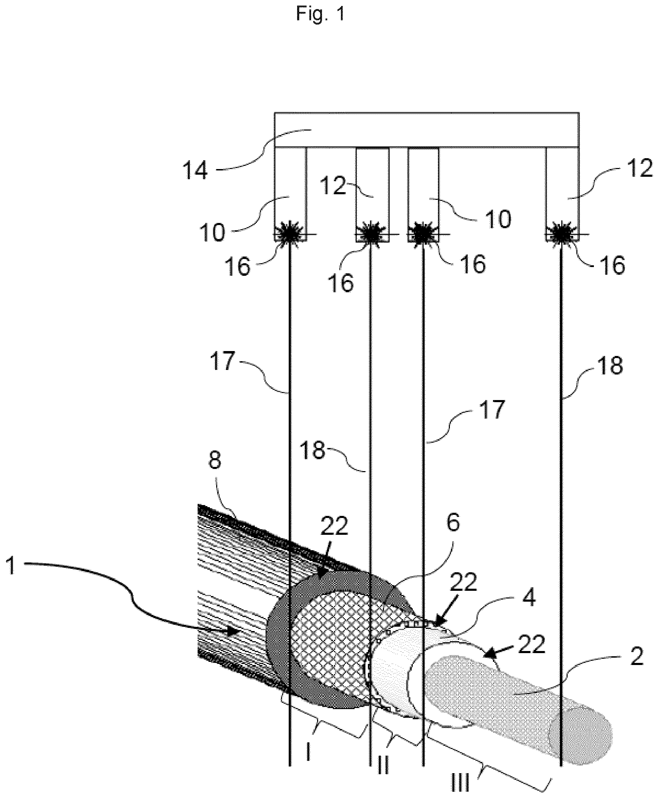

Fig. 1 zeigt eine Ausführungsform eines Kabels 1 aufweisend einen Innenleiter 2, eine erste Schicht 4, die um den Innenleiter 2 angeordnet ist, eine zweite Schicht 6, die um die erste Schicht 4 angeordnet ist, und eine dritte Schicht 8, die um die zweite Schicht 6 angeordnet ist. Das Kabel 1 ist bevorzugt radialsymmetrisch aufgebaut. In der dargestellten Ausführungsform ist die erste Schicht 4 ein Dielektrikum, die zweite Schicht 6 ein Schirmgeflecht, und die dritte Schicht 8 ein Mantel. In einer alternativen Ausführungsform kann das Kabel 1 weniger oder auch mehr Schichten, wie z.B. eine zusätzliche Metallfolie unter oder über dem Schirmgeflecht 6, aufweisen. Der Innenleiter 2 besteht in einer bevorzugten Ausführungsform aus einem Draht. In alternativen Ausführungsformen kann der Innenleiter 2 aus mehreren Einzeldrähten bestehen. Der Innenleiter 2 weist ein elektrisch leitfähiges Material, bevorzugt Metall, auf, um elektrische Signale von einem Kabelende an ein anderes Kabelende zu leiten. Das Dielektrikum 4 dient als Sperrschicht zu dem Innenleiter 2 und leitet die elektrischen Signale nicht. Insbesondere durch die Anordnung des Dielektrikums 4 breiten sich die Signale nur in bzw. entlang des Innenleiters 2 aus. Das Schirmgeflecht 6 dient als Abschirmung des Innenleiters 2 gegenüber elektromagnetischen Störungen aus der Umwelt. Das Schirmgeflecht 6 weist bevorzugt eine metallische Struktur auf, insbesondere ein Geflecht aus verwobenen Litzen. Das Schirmgeflecht 6 verleiht dem Kabel 1 zusätzliche Steifigkeit. Der Mantel 8 dient als Schutz der darunter liegenden Schichten 4, 6 sowie dem Innenleiter 2 vor Einflüssen, insbesondere mechanischen und/oder chemischen Einflüssen, aus der Umwelt. Der Mantel 8 weist bevorzugt einen Kunststoff oder ein Metall auf. Ausführungsformen von Kabeln 1 mit Metallmantel 8 können Semi-Rigit-Koaxialkabel, Heizkabel und/oder Thermoelemente sein. Kabel 1 mit einem Metallmantel 8 weisen in der Regel eine höhere Steifigkeit auf, als Kabel 1 mit einem Kunststoffmantel 8. Insbesondere beim Schneiden und/oder Abtragen eines Metallmantels 8 werden im Stand der Technik andere Verfahren, zum Beispiel Zerspannungsverfahren, verwendet als bei einem Kunststoffmantel 8.

Fig. 1 zeigt weiterhin, wie in einem Endbereich des Kabels 1 die Schichten 4, 6, 8 des Kabels 1 entlang bestimmter Abschnitte I, II, III abgetragen sind. Sukzessive ist der Mantel 8, das Schirmgeflecht 6 und das Dielektrikum 4 abgetragen, so dass die jeweils darunter liegende Schicht 6, 4, 2 nach außen freigelegt ist. Die Länge der Abschnitte I, II, III ist im Allgemeinen beliebig und kann in einer Ausführungsform gleich sein. In einer anderen Ausführungsform können in einem Abschnitt I, II, III auch zwei oder mehr aneinander angrenzende Schichten entfernt sein. Die entfernten Schichten 4, 6, 8 sind bevorzugt vollumfänglich in dem jeweiligen Abschnitt I, II, III entfernt. In einer alternativen Ausführungsform kann eine Schicht abgetragen werden, die freigelegt und über zumindest eine ursprünglich darüber liegende Schicht umgestülpt wurde. Als ein Bespiel könnte das Schirmgeflecht 6 freigelegt und, vom Kabelende weg, über den Mantel 8 umgestülpt sein. Ein nachträgliches Entfernen von überstehenden Schirmdrähten des Schirmgeflechts 6 über dem Mantel 8 kann eine bevorzugte Anwendung des Verfahrens zum Schneiden und/oder Abtragen von Schichten 4, 6, 8 eines Kabels 1 sein.

In einer bevorzugten Ausführungsform ist das Kabel 1 ein µ-Koaxialkabel. Bei einem µ-Koaxialkabel liegen der Durchmesser des Innenleiters 2 sowie die Dicken der einzelnen Schichten 4, 6, 8 im µm-Bereich. Typische Größenangaben bei µ-Koaxialkabeln sind für den Innenleiter ein Durchmesser von 50 bis 150 µm und darüberliegenden Schichten mit Schichtdicken von 30 bis 150 µm pro Schicht, wobei jede Schichtdicke individuell sein kann. Aufgrund der geringen Größen sind µ-Koaxialkabel besonders schwierig mechanisch zu bearbeiten, da sehr schnell umliegende Schichten und Abschnitte unbeabsichtigt beschädigt werden können.

Fig. 1 zeigt weiterhin zumindest eine Laserstrahlquelle 16, die zumindest einen ersten Laserstrahl 17 und bevorzugt einen zweiten Laserstrahl 18 erzeugen kann. Der erste Laserstrahl 17 kann durch einen ersten Laser 10 oder durch einen Ultrakurzpulslaser (UKP-Laser) 14 mit einer ersten Einstellung erzeugt werden. Die Eigenschaften des ersten Laserstrahls 17 sind so gewählt, dass der erste Laserstrahl 17 zumindest in der dritten Schicht, d.h. dem Mantel, 8 eine hohe Absorption und in der direkt darunter liegenden zweiten Schicht, d.h. dem Schirmgeflecht, 6 eine niedrige Absorption aufweist.

Eine hohe Absorption bedeutet, dass viel Energie des Laserstrahls 17, 18 von dem Material der entsprechenden Schicht 4, 6, 8 aufgenommen wird. Eine hohe Energieaufnahme bewirkt physikalische Reaktionen in dem Material der entsprechenden Schicht 4, 6, 8, wodurch das bestrahlte Material gelöst und/oder direkt entfernt wird. Eine mögliche Reaktion ist das Sublimieren des Materials, wobei das bestrahlte Material aufgrund der Laserenergie direkt vom festen in den gasförmigen Zustand übergeht, und somit von der Schicht 4, 6, 8 aus festem Material unmittelbar entfernt wird.

Eine niedrige Absorption bedeutet, dass keine oder kaum Energie des Laserstrahls 17, 18 in das bestrahlte Material übergeht, und somit auch keine physikalischen Reaktionen hervorgerufen werden. Der Laserstrahl 17, 18 durchdringt in diesem Fall die entsprechende Materialschicht 2, 4, 6 bzw. Teile davon oder wird reflektiert, ohne die Schicht 2, 4, 6 zu verändern.

In einer bevorzugten Ausführungsform ist die Eigenschaft des ersten Laserstrahls 17 so gewählt, dass der erste Laserstrahl 17 weiterhin in der ersten Schicht 4, d.h. dem Dielektrikum, eine hohe Absorption und in dem darunter liegenden Innenleiter 2 eine niedrige Absorption aufweist.

In einer weiteren bevorzugten Ausführungsform sind die Eigenschaften des zweiten Laserstrahls 18 so gewählt, dass der zweite Laserstrahl 18 zumindest in der zweiten Schicht 6, d.h. dem Schirmgeflecht, eine hohe Absorption und in der direkt darunter liegenden ersten Schicht 4, d.h. dem Dielektrikum, eine niedrige Absorption aufweist.

Unter den Eigenschaften eines Laserstrahls 17, 18 werden Parameter verstanden, die an zumindest ein Material angepasst werden können, um in dem zumindest einem Material eine hohe oder niedrige Absorption zu erreichen. Eigenschaften eines Laserstrahls 17, 18 werden insbesondere bei dem ersten und zweiten Laser 10, 12 durch die Art des Lasers bestimmt. In einer Ausführungsform ist der erste Laser ein CO2-Laser und der zweite Laser ein Faserlaser. Weitere Parameter können eine Bestrahlzeit bzw. Einwirkzeit, die Energie bzw. Energiedichte und/oder die Wellenlänge des Laserlichts, d.h. des Laserstrahls 17, 18, sein. Durch Anpassen von einem oder mehrerer Parameter können insbesondere die Eindringtiefe des Laserstrahls 17, 18 in ein Material sowie hervorgerufene physikalische Reaktionen bestimmt werden.

Bei dem in den Figuren 1 bis 5 dargestellten Kabel 1 ist der Mantel 8 aus Kunststoff, das Schirmgeflecht 6 aus Metall, das Dielektrikum aus Kunststoff 4 und der Innenleiter 2 aus Metall. Ein CO2-Laser erzeugt Laserlicht bevorzugt im mittleren Infrarotbereich. Der CO2-Laser ist dadurch geeignet Kunststoffe zu schneiden bzw. zu entfernen. In einer Metallschicht erzeugt der CO2-Laser dagegen, in Abhängigkeit der gewählten Prozessparameter, keine oder nur geringe Wechselwirkungen. Ein Faserlaser erzeugt bevorzugt Laserlicht im nahen Infrarotbereich. Der Faserlaser ist dadurch geeignet Metall zu schneiden bzw. zu entfernen. In Kunststoffschichten erzeugt der Faserlaser, in Abhängig von den gewählten Prozessparametern und den beinhalteten Farbstoffen, keine oder nur geringe Wechselwirkungen. Die Verwendung des ersten und/oder zweiten Lasers 17, 18 erfolgt bevorzugt in Abhängigkeit des Materials der zu schneidenden bzw. zu entfernenden Schicht.

In einer alternativen Ausführungsform wird anstelle der zwei unterschiedlichen Laser 10, 12 ein dritter Laser, bevorzugt ein UKP-Laser, 14 mit zumindest zwei verschiedenen Einstellungen oder Betriebsmodi verwendet. Von der Art des Laserlichts, das mit einem UKP-Laser 14 erzeugt wird, ist der UKP-Laser materialunabhängig. Ein UKP-Laser 14 unterscheidet sich von anderen Lasern 10, 12 im Wesentlichen durch die Erzeugung von extrem kurzen Laserpulsen, bevorzugt im Pico- und Femtosekunden-Bereich. Über die Pulslänge kann der Absorptionsgrad und die Abtragsrate in einem bestimmten Material eingestellt werden. Anders ausgedrückt kann eine Materialabhängigkeit des Laserstrahls 17, 18 durch die Pulslänge erreicht und geregelt werden. Neben der Pulslänge bzw. -dauer kann auch die Wiederholfrequenz, d.h. Repetitionsrate, sowie die Geschwindigkeit der Achsen bzw. der Spiegel, die Materialabhängigkeit des Laserstrahls 17, 18 beeinflussen.

Weiterhin können derzeit verwendete Infrarot-Laser 10, 12 thermische Prozesse in dem bestrahlten Material erzeugen. Diese thermischen Prozesse kommen durch einen zu langen thermischen Eintrag von Laserenergie zustande. Die thermischen Prozesse heizen das Material auf. Das Aufheizen des zu bearbeitenden Materials ist ein unerwünschter Nebeneffekt. Besonders vorteilhaft kann mit einem UKP-Laser 14 ein sogenannter Kalter Prozess durchgeführt werden, wobei das Material bearbeitet wird, ohne sich zu erwärmen. Dieser Kalte Prozess kann für Metalloberflächen und auch Kunststoffoberflächen eingesetzt werden. Insbesondere das Sublimieren von Material, d.h. der direkte Übergang von einem festen in einen gasförmigen Zustand, stellt einen Kalten Prozess dar, und kann durch einen UKP-Laser 14 erreicht werden.

Bei dem in Fig. 1 dargestellten Kabel 1 kann ein UKP-Laser 14 für die Laserstrahlquelle 16 bereitgestellt werden, wobei insbesondere die Pulsdauer und Repetitionszeiten des UKP-Lasers 14, sowie die Geschwindigkeit der Achsen bzw. der Spiegel, an das zu schneidende bzw. abzutragende Material angepasst sind. Durch die eingestellte Materialabhängigkeit des UKP-Lasers 14 kann der erzeugte erste und/oder zweite Laserstrahl 17, 18 jede Schicht 4, 6, 8 des Kabels 1 stufenweise bzw. einzeln entfernen. Insbesondere werden bei der Bearbeitung von einer Schicht keine darunterliegenden Schichten beeinflusst oder mechanisch verformt.

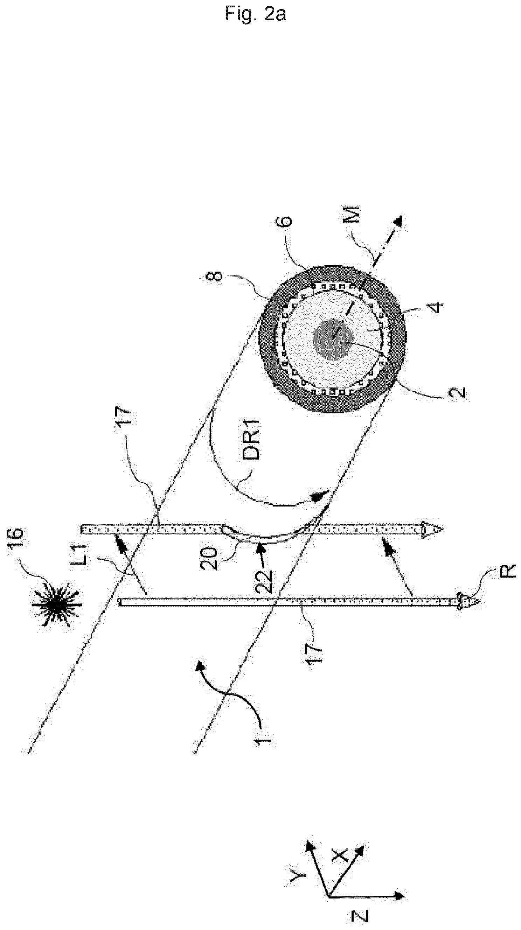

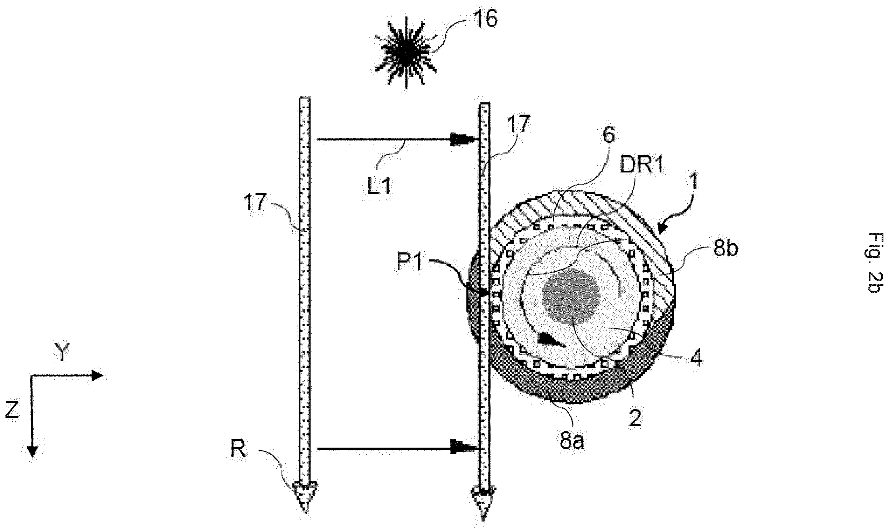

Fig. 2a zeigt den Schritt des Schneidens der dritten Schicht 8, d.h. des Mantels, des Kabels 1. Beim Schneiden erzeugt der erste Laserstrahl 17 einen Schnitt 20 in dem Mantel 8. In Vorbereitung zum eigentlichen Schneiden, kann der erste Laserstrahl 17 als eine Passante zum Kabel 1 ausgerichtet sein. Die Passante berührt das Kabel 1 nicht, und kann zum Ausrichten des Laserstrahls in der Ebene dienen. Zum Schneiden wird der erste Laserstrahl 17 dann bevorzugt von einem tangentialen Punkt an der Außenseite des Kabels 1 bzw. des Mantels 8 in Richtung der Mittelachse M des Kabels 1 verschoben. In Figs. 2a und 2b wird der erste Laserstrahl insgesamt um eine erste Länge L1 verschoben. Bei dem Verschieben entfernt der erste Laserstrahl 17 Material des Mantels 8, das bestrahlt wurde. Durch das sukzessive Entfernen von Material schneidet sich der erste Laserstrahl 17 durch den Mantel 8 und erzeugt eine Schnittkante 22. Das Verschieben des ersten Laserstrahls 17 erfolgt bevorzugt bis zu einem ersten Schichtgrenzpunkt P1, der ein tangentialer Punkt für den ersten Laserstrahl 17 an der radialen Grenze zwischen dem Mantel 8 und der zweiten Schicht 6, dem Schirmgeflecht, ist.

Beim Schneiden, insbesondere in der Nähe und am ersten Schichtgrenzpunkt P1, erzeugt der erste Laserstrahl 17 keine Verformungen und/oder Entfernung an dem darunterliegenden Schirmgeflecht 6. Selbst wenn der erste Laserstahl 17 an dem ersten Schichtgrenzpunkt P1 teilweise in das Schirmgeflecht 6 eindringt, verhindert der niedrige Absorptionsgrad des ersten Laserstrahls 17 in dem Schirmgeflecht 6 eine physikalische Reaktion bzw. Wechselwirkung, so dass das Schirmgeflecht 6 nicht verformt wird. Generell verhindert die tangentiale Ausrichtung des ersten und/oder zweiten Laserstrahls 17, 18 am Kabel 1 ein ungewolltes Eindringen des ersten und/oder zweiten Laserstrahls 17, 18 in darunterliegende Schichten 6, 4, 2, so dass in diesen Schichten 6, 4, 2 keine ungewollte Verformung und/oder Entfernung durch den jeweiligen ersten oder zweiten Laserstrahl 17, 18 bewirkt wird.

In einer Ausführungsform dreht sich das Kabel 1 um seine Mittelachse M bzw. wird um seine Mittelachse M durch eine Kabelhaltevorrichtung gedreht. Insbesondere lagert die Haltevorrichtung das Kabel 1, so dass es drehbar um seine Mittelachse M ist. Durch die Drehbewegung des Kabels 1 gegenüber dem ersten Laserstrahl 17, entfernt der erste Laserstrahl 17 den Mantel 8 vollumfänglich vom Kabel 1. Die Schnittkante 22 ist nach vollendetem Schneidevorgang eine Schnittfläche 22, insbesondere in Form einer Ringfläche.

Die Schnittkante 22 liegt bevorzugt in einer Ebene. Insbesondere liegt die Schnittkante 22 bevorzugt in einer Ebene quer und senkrecht zur Mittelachse M des Kabels 1.

Wird das Kabel 1, wie in Fig. 2a und 2b dargestellt, beim Schneiden in einer ersten Drehrichtung DR1 gedreht, so wird der Übergangsbereich von der bereits entfernten Mantelschicht 8a zu der noch bestehenden Mantelschicht 8b in einer Laserstrahlrichtung R mit dem ersten Laserstrahl 17 bewegt. Durch diese gleichgerichtete Bewegung, erfolgt eine schleppende Bearbeitung bzw. Entfernung des Mantels 8 vom Kabel 1. Es hat sich in Versuchen des Erfinders überraschend gezeigt, dass das schleppende Entfernen eine sehr gleichmäßige Schnittkante 22 bei Kunststoffen erzeugt. Insbesondere wird die gleichmäßige Schnittkante 22 durch eine Art leichtes Anschmelzen des Kunststoffs erreicht. Bei einer metallischen Schicht kann es bei der schleppenden Entfernung zu Schuppenbildung und/oder Ablagerungen an der Schnittkante 22 kommen, was die Gleichmäßigkeit der Schnittkante 22 verringert.

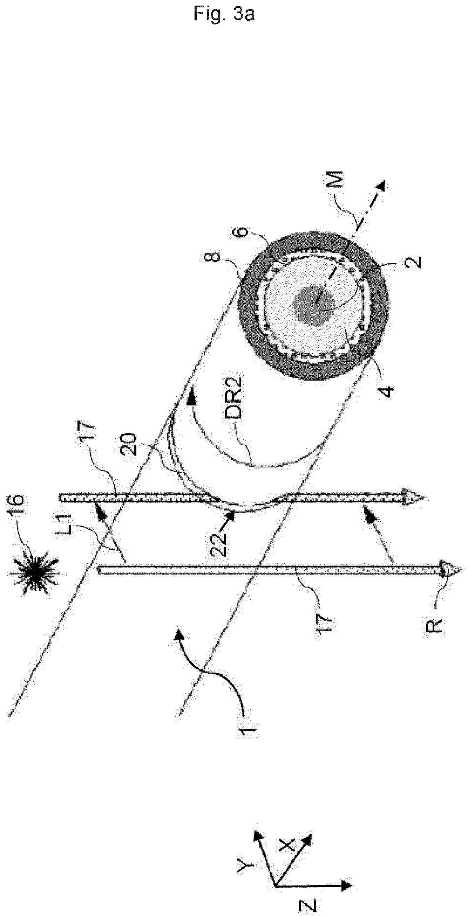

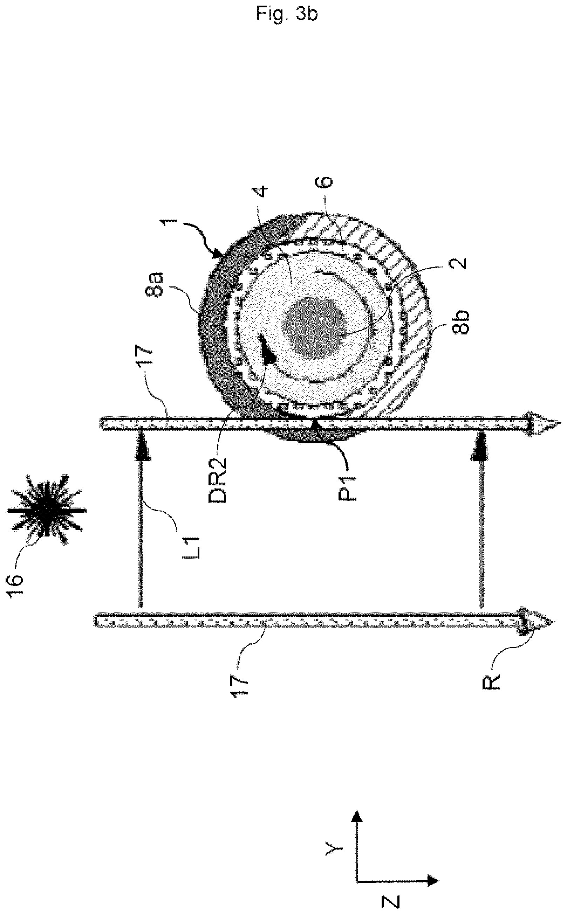

Wird das Kabel 1, wie in Fig. 3a und 3b dargestellt, beim Schneiden in einerzweiten Drehrichtung DR2 gedreht, wobei die zweite Drehrichtung DR2 bevorzugt entgegen der ersten Drehrichtung DR1 ist, so wird der Übergangsbereich von der bereits entfernten Mantelschicht 8a zu der noch bestehenden Mantelschicht 8b entgegen der Laserstrahlrichtung R des ersten Laserstrahls 17 bewegt. Durch diese gegen-gerichtete Bewegung erfolgt eine stechende Bearbeitung bzw. Entfernung des Mantels 8 vom Kabel 1. Es hat sich in Versuchen des Erfinders überraschend gezeigt, dass das stechende Entfernen eine gleichmäßige Schnittkante 22 bei metallischen Materialien bzw. Schichten erzeugt. Insbesondere wird die gleichmäßige Schnittkante 22 durch eine Art Wegdrücken der gelösten Partikel von der Schnittkante 22 erreicht. Das Wegdrücken der Partikel kann zum Teil durch den jeweiligen Laserstrahl 17, 18 als auch durch Partikeldruck von darauffolgend gelösten Partikeln erfolgen.

Bevorzugt ist die Drehrichtung an den Schichtaufbau des zu bearbeitenden Kabels 1 bzw. das Material der zu entfernenden Schicht 4, 6, 8 angepasst, um gleichmäßige Schnittkanten 22 zu erzeugen.

Das Drehen des Kabels 1 während des Abtragens einer Schicht 4, 6, 8, was insbesondere ein kontinuierliches Drehen in die erste oder zweite Drehrichtung DR1, DR2 ist, wird durch die Kabelhaltevorrichtung erzeugt. Die Kabelhaltevorrichtung hält das Kabel 1 zumindest während der Bearbeitung. Bevorzugt weist die Kabelhaltevorrichtung ein Backenfutter oder eine Spannzange auf, das bzw. die rotativ läuft. Das Kabel 1 ist in der Kabelhaltevorrichtung bevorzugt entlang seiner Mittelachse M ausgerichtet. Das Kabel 1 ist bevorzugt ein Kabelstück mit einer Länge kleiner als 5m, bevorzugt kleiner als 3m und noch bevorzugter kleiner als 2m. In einer alternativen Ausführungsform kann das Kabel 1 als Meterware in der Kabelhaltevorrichtung angeordnet sein. Meterware bezeichnet eine Kabellänge von deutlich über 5m. Das kontinuierliche Drehen umfasst auch den Fall, dass eine bestimmte Anzahl von Umdrehungen in die eine Drehrichtung und dann, bevorzugt ohne Laserbearbeitung der gleichen Schicht, die gleiche Anzahl von Umdrehungen in die entgegengesetzte Drehrichtung gedreht wird. Bei der Drehung in die entgegengesetzte Drehrichtung kann bereits eine darunterliegende Schicht mit Laserlicht bearbeitet werden. Das Drehen in die eine und dann in die andere Drehrichtung soll einem Verdrehen des Kabels 1 aufgrund seiner Trägheit entgegenwirken. Insbesondere kann es durch die hohen Drehgeschwindigkeiten zu einem Einschnüren der Litzen des Innenleiters kommen, was vermieden werden muss.

Bevorzugt sind der erste, zweite und dritte Laser 10, 12, 14 ortsfest angeordnet. An der Laserstrahlquelle 16 tritt der erste oder zweite Laserstrahl 17, 18 in Richtung des Kabels 1 aus. Die Laserstrahlquelle 16 weist bevorzugt ein optisches System auf. Das zumindest eine optische System umfasst bevorzugt zumindest eine Bearbeitungsoptik oder eine Scanneroptik.

Bei einer Bearbeitungsoptik bzw. einem Bearbeitungskopf wird der erzeugte Laserstrahl 17, 18 mit Hilfe einer Linse direkt in einer bestimmten Laserstrahlrichtung R ausgerichtet. Die Bearbeitungsoptik hat den Vorteil, dass der Laserstrahl 17, 18 nicht durch Spiegel oder ähnliche Bauteile abgeschwächt wird. Bei der Verwendung eines Bearbeitungskopfes werden bevorzugt Linearachsen für die Bewegung verwendet.

Die Scanneroptik oder auch der Scannerkopf kann in einer Ausführungsform aus zumindest zwei Spiegeln und einer Fokussierlinse aufgebaut sein. Der Laserstrahl 17, 18 wird von einem Spiegel zu einem anderen Spiegel und schließlich zur Fokussierlinse geleitet. Die Spiegel werden bevorzugt über Motoren angesteuert und können den Laserstrahl 17, 18 in beliebigen 2D Formen bewegen. Der Scannerkopf hat den Vorteil, dass die Bewegung des Laserstrahls 17, 18 sehr schnell erfolgen kann, da das System wenig Trägheit aufweist

In einer alternativen Ausführungsform kann anstelle der Bewegungen im Scannerkopf die Haltevorrichtung des Kabels 1 bewegt werden. Zusätzlich kann sich eine Zustellachse für die Positionierung in der Fokuslage (Z-Achse) an dem Bearbeitungs- bzw. Scannerkopf befinden. Alle Achsen X, Y, Z können auch simultan zueinander bewegt werden.

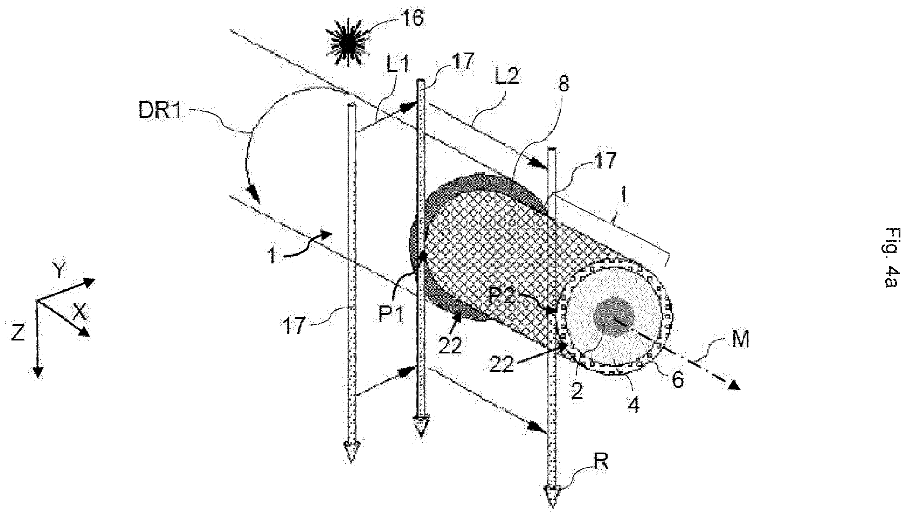

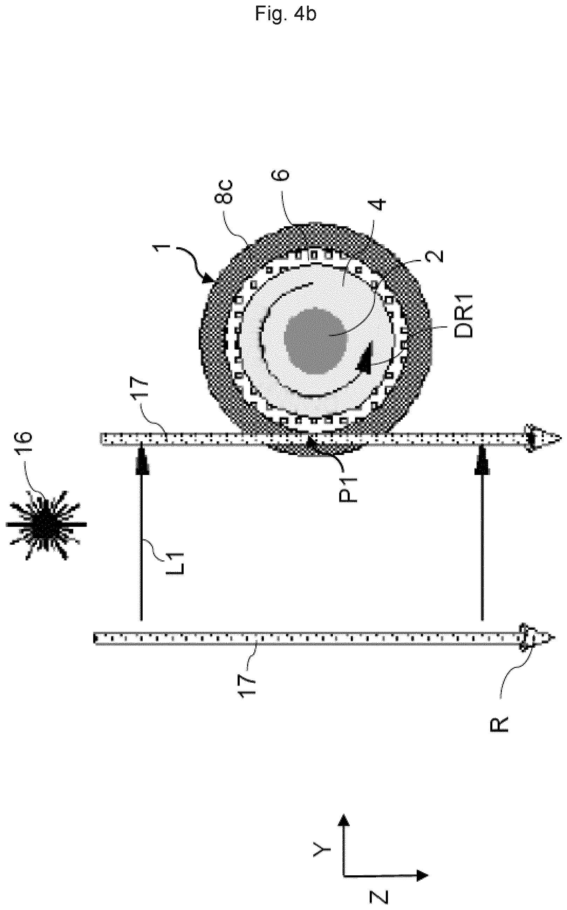

Neben einer, vorzugsweise linearen, Bewegung des ersten Laserstrahls 17 in einer ersten Richtung Y zur Mittelachse M des Kabels 1, ausgehend von einem Passanten- oder Tangentenpunkt bis zu dem ersten Schichtgrenzpunkt P1, kann der erste Laserstrahl 17 in einer alternativen Ausführungsform zusätzlich entlang der Mittelachse M des Kabels 1 bis zu einem zweiten Schichtgrenzpunkt P2 verschoben werden (vgl. Fig 4a). Durch das zusätzliche Verschieben des ersten Laserstrahls 17 entlang der Mittelachse M des Kabels 1 um eine zweite Länge L2, wird die zu entfernende Schicht, der Mantel 8c in Figs. 4a und 4b, in einem Abschnitt I abgetragen. Wie in Figs. 4a und 4b dargestellt, wurde der Mantel 8c des Kabels 1 in dem Abschnitt I vollumfänglich entfernt. Das darunterliegende Schirmgeflecht 6, die noch tiefer liegende Schicht 4 sowie der Innenleiter 2 wurden weder verformt noch abgetragen. Die Verschiebung entlang dem Kabel 1 in einer zweiten Richtung X, d.h. der Längsrichtung, kann im Anschluss auch mit dem zweiten Laserstrahl 18 für das Schirmgeflecht 6 oder generell für weitere Schichtabtragungen durchgeführt werden. Die abwechselnde Verwendung des ersten und zweiten Laserstrahls 17, 18, in Kombination mit der tangentialen Ausrichtung des jeweiligen Laserstrahls 17, 18, führt dazu, dass immer nur die gerade zu entfernende Schicht abgetragen wird. Die Abfolge der Verwendung des ersten und/oder zweiten Laserstrahls 17, 18 ist in Abstimmung mit dem Schichtaufbau des jeweiligen Kabels 1 wiederholbar.

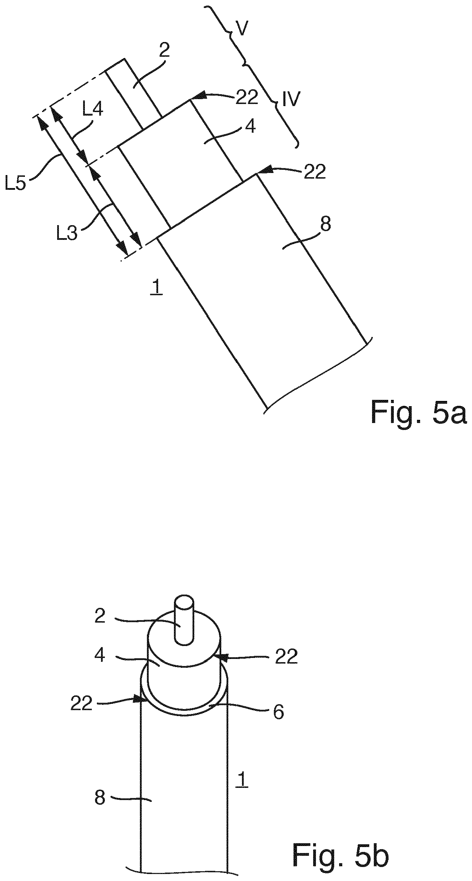

Figs. 5a und 5b zeigen eine Ausführungsform eines Kabels 1, dass mit dem beschriebenen Verfahren herstellbar ist. In einem Endbereich des Kabels 1 wurde in einem Abschnitt IV der Mantel 8 und das darunterliegende Schirmgeflecht 6 entfernt. Dadurch ist das Dielektrikum 4 in diesem Bereich nach außen freiliegend. In einem weiteren Abschnitt V wurde neben den bereits erwähnten Schichten 6, 8 auch noch das Dielektrikum 4 entfernt, so dass der Innenleiter 2 nach außen frei liegt. Insgesamt wurden in Fig. 5a der Mantel 8 und das Schirmgeflecht 6 auf einer Länge L5 vom Kabel 1 entfernt. Das Dielektrikum wurde auf einer Länge L4 vom Kabel 1 entfernt.

Die Schnittkanten 22 des Mantels 8 und des Schirmgeflechts 6 am Abschnitt IV, sowie die Schnittkante 22 des Dielektrikums 4 am Abschnitt V, liegen in einer jeweiligen Ebene, wobei in der dargestellten Ausführungsform die Schnittkanten 22 des Mantels 8 und des Schirmgeflechts 6 in der gleichen Ebene liegen. Die Schnittkanten 22 sind gleichmäßig und weisen keine Verformungen oder Unregelmäßigkeiten auf. Insbesondere weisen die freiliegenden Bereiche des Dielektrikums 4 und des Innenleiters 2 keine Rückstände der vormals direkt darüberliegenden Schicht 4, 6 und auch keine Verformungen auf. Die Kanten und Oberflächen jedes Bereichs IV, V sind sehr gleichmäßig.

Die gleichmäßigen Schnittkanten 22 ermöglichen insbesondere eine genaue und zuverlässige Bestimmung der Längen L3, L4, L5 der Kabelabschnitte. Dadurch kann das Signalverhalten bei der Signalweiterleitung besser bestimmt und angepasst werden. Auf das in Figs. 5a und 5b dargestellte Kabel 1 kann bei der Kabelkonfektionierung zumindest ein Anschlusselement befestigt werden. Mit dem Anschlusselement ist das Kabel 1 über eine Steckverbindung bei der Montage mit einem komplementären Anschlusselement verbindbar. Die gleichmäßige Form der Kabelabschnitte IV, V erleichtert das Konfektionieren des Kabels 1 mit dem verbindbaren Anschlusselement.

### BEZUGSZEICHENLISTE

- 1: Kabel
- 2: Innenleiter
- 4: Erste Schicht
- 6: Zweite Schicht
- 8: Dritte Schicht
- 8a: entfernte dritte Schicht
- 8b: bestehende dritte Schicht
- 8c: flächig entfernte dritte Schicht
- 10: erster Laser
- 12: zweiter Laser
- 14: dritter Laser
- 16: Laserstrahlquelle
- 17: erster Laserstrahl
- 18: zweiter Laserstrahl
- 20: Schnitt
- 22: Schneidekante
- DR1: erste Drehrichtung
- DR2: zweite Drehrichtung
- I, II, III, IV, V: Kabelabschnitte
- L1: erste Länge
- L2: zweite Länge
- L3, L4, L5: Längen von Kabelabschnitten
- M: Mittelachse
- P1: erster Schichtgrenzpunkt
- P2: zweiter Schichtgrenzpunkt
- R: Laserstrahlrichtung
- X: zweite Richtung (Längsachse)
- Y: erste Richtung (Querachse)
- Z: dritte Richtung

## Patentansprüche

1. Verfahren zum Schneiden und/oder Abtragen von Schichten eines Kabels (1), wobei das Kabel (1) zumindest einen Innenleiter (2), eine erste Schicht (4), die den Innenleiter (2) umschließt, eine zweite Schicht (6), die die erste Schicht (4) umschließt, und eine dritte Schicht (8), die die zweite Schicht (6) umschließt und nach Außen freiliegt, aufweist, und wobei das Verfahren die folgenden Schritte aufweist:
Erzeugen eines ersten Laserstrahls (17);
Ausrichten des ersten Laserstrahls (17) in einer Ebene (Y-Z) senkrecht und quer zu einer Mittelachse (M) des Kabels (1), so dass der erste Laserstrahl (17) in der Ebene (Y-Z) eine Passante zum Kabel (1) bildet;
Verschieben des ersten Laserstrahls (17) um eine erste Länge (L1) in Richtung der Mittelachse (M) des Kabels (1) bis zu einem ersten Schichtgrenzpunkt (P1) zwischen der dritten und der zweiten Schicht (8, 6), wobei der erste Laserstrahl (17) eine hohe Absorption in der dritten Schicht (8) und eine niedrige Absorption in der zweiten Schicht (6) aufweist; und
Drehen des Kabels (1), während dem Schritt des Verschiebens des ersten Laserstrahls (17), in einer ersten Drehrichtung (DR1) um die Mittelachse (M) des Kabels (1).

2. Verfahren nach Anspruch 1, im Anschluss an die vorherigen Schritte, weiterhin aufweisend die Schritte:
Erzeugen eines zweiten Laserstrahls (18);
Ausrichten des zweiten Laserstrahls (18) gemäß dem ersten Laserstrahl (17) am ersten Schichtgrenzpunkt (P1);
Verschieben des zweiten Laserstrahls (18) in Richtung der Mittelachse (M) des Kabels (1) bis zu einem weiteren Schichtgrenzpunkt zwischen der zweiten Schicht (6) und der ersten Schicht (4), wobei der zweite Laserstrahl (18) eine hohe Absorption in der zweiten Schicht (6) und eine niedrige Absorption in der ersten Schicht (4) aufweist; und
Drehen des Kabels (1), während dem Schritt des Verschiebens des zweiten Laserstrahls (18), in der ersten oder einer zweiten Drehrichtung (DR1, DR2) um die Mittelachse (M) des Kabels (1).

3. Verfahren nach Anspruch 2, im Anschluss an die vorherigen Schritte, weiterhin aufweisend die Schritte:
Erzeugen des ersten Laserstrahls (17);
Ausrichten des ersten Laserstrahls (17) gemäß dem zweiten Laserstrahl (18) an dem weiteren Schichtgrenzpunkt;
Verschieben des ersten Laserstrahls (17) in Richtung der Mittelachse (M) des Kabels (1) bis zu einem inneren Schichtgrenzpunkt zwischen der ersten Schicht (4) und dem Innenleiter (2), wobei der erste Laserstrahl (17) eine hohe Absorption in der ersten Schicht (4) und eine niedrige Absorption in dem Innenleiter (2) aufweist; und
Drehen des Kabels (1), während dem Schritt des Verschiebens des ersten Laserstrahls (17), in die erste oder zweite Drehrichtung (DR1, DR2) um die Mittelachse (M) des Kabels (1).

4. Verfahren nach einem der Ansprüche 1 bis 3, weiterhin aufweisend den Schritt:
Verschieben des ersten und/oder zweiten Laserstrahls (17, 18) um eine zweite Länge (L2) in Längsrichtung (X) des Kabels (1).

5. Verfahren nach einem der Ansprüche 1 bis 4, bei dem die erste und/oder zweite Drehrichtung (DR1) in Gleichlauf mit einer Laserstrahlrichtung (R) verläuft, wenn die Schicht (4, 6, 8) einen Kunststoff aufweist, und in Gegenlauf mit der Laserstrahlrichtung (R) verläuft, wenn die Schicht (4, 6, 8) ein Metall aufweist, wobei die zweite Drehrichtung (DR2) bevorzugt entgegen der ersten Drehrichtung (DR1) ist.

6. Verfahren nach einem der Ansprüche 1 bis 5, bei dem das Kabel ein µ-Koaxialkabel ist.

7. Vorrichtung zum Schneiden und/oder Abtragen von Schichten eines Kabels (1), wobei das Kabel (1) zumindest einen Innenleiter (2), eine erste Schicht (4), die den Innenleiter (2) umschließt, eine zweite Schicht (6), die die erste Schicht (4) umschließt, und eine dritte Schicht (8), die die zweite Schicht (6) umschließt und nach Außen freiliegt, aufweist, aufweisend:
einen Laser (10, 14) zum Erzeugen eines ersten Laserstrahls (17);
zumindest eine Laserstrahlquelle (16), die eingerichtet ist, den ersten Laserstrahl (17) so bereitzustellen, dass der erste Laserstrahl (17) in einer Ebene (Y-Z) senkrecht und quer zu einer Mittelachse (M) des Kabels (1) beabstandet von einer Außenseite des Kabels (1) ausrichtbar und in Richtung der Mittelachse (M) des Kabels (1) verschiebbar ist;
eine Kabelhaltevorrichtung zum Drehen des Kabels (1), während des Verschiebens des ersten Laserstrahls (17), in einer ersten Drehrichtung (DR1) um die Mittelachse (M) des Kabels (1); wobei
der erste Laserstrahl (17) einen hohen Absorptionsgrad in einer Kunststoffschicht und einen niedrigen Absorptionsgrad in einer Metallschicht, oder einen hohen Absorptionsgrad in einer Metallschicht und einen niedrigen Absorptionsgrad in einer Kunststoffschicht aufweist.

8. Vorrichtung nach Anspruch 7, bei der der Laser (10, 14) einen ersten Laser (10) oder einen dritten Laser (14), insbesondere einen Ultrakurzpulslaser, mit einer ersten Einstellung umfasst.

9. Vorrichtung nach Anspruch 8, weiterhin aufweisend einen zweiten Laser (12), oder den dritten Laser (14) mit einer zweiten Einstellung, zum Erzeugen eines zweiten Laserstrahls (18), wobei der zweite Laserstrahl (18) wie der erste Laserstrahl (17) ausrichtbar und verschiebbar ist, und umgekehrte Absorptionsgrade zu dem ersten Laserstrahl (17) aufweist.

10. Vorrichtung nach einem der Ansprüche 7 bis 9, bei der die Laserstrahlquelle (16) eine Optik mit einem Bearbeitungskopf oder einem Scannerkopf aufweist, wobei die Optik weiterhin so eingerichtet ist, dass der Laserstrahl (17, 18) entlang der Mittelachse (M) des Kabels (1) verschiebbar ist.

## Claims

1. Method for cutting and/or removing layers of a cable (1), wherein the cable (1) has at least one inner conductor (2), a first layer (4), which surrounds the inner conductor (2), a second layer (6), which surrounds the first layer (4), and a third layer (8), which surrounds the second layer (6) and is exposed towards the outside, and wherein the method has the following steps:
generating a first laser beam (17);
aligning the first laser beam (17) in a plane (Y-Z) perpendicular and transverse to a central axis (M) of the cable (1), so that the first laser beam (17) forms a passant to the cable (1) in the plane (Y-Z);
displacing the first laser beam (17) by a first length (L1) in the direction of the central axis (M) of the cable (1) as far as a first layer boundary point (P1) between the third and the second layer (8, 6), wherein the first laser beam (17) has high absorption in the third layer (8) and low absorption in the second layer (6); and
rotating the cable (1), during the step of displacing the first laser beam (17), in a first direction of rotation (DR1) about the central axis (M) of the cable (1).

2. Method according to Claim 1, also comprising the following steps after the preceding steps:
generating a second laser beam (18);
aligning the second laser beam (18) in accordance with the first laser beam (17) at the first layer boundary point (P1);
displacing the second laser beam (18) in the direction of the central axis (M) of the cable (1) as far as a further layer boundary point between the second layer (6) and the first layer (4), wherein the second laser beam (18) has high absorption in the second layer (6) and low absorption in the first layer (4); and
rotating the cable (1), during the step of displacing the second laser beam (18), in the first or a second direction of rotation (DR1, DR2) about the central axis (M) of the cable (1).

3. Method according to Claim 2, also comprising the following steps after the preceding steps:
generating the first laser beam (17);
aligning the first laser beam (17) in accordance with the second laser beam (18) at the further layer boundary point;
displacing the first laser beam (17) in the direction of the central axis (M) of the cable (1) as far as an internal layer boundary point between the first layer (4) and the inner conductor (2), wherein the first laser beam (17) has high absorption in the first layer (4) and low absorption in the inner conductor (2); and
rotating the cable (1), during the step of displacing the first laser beam (17), in the first or the second direction of rotation (DR1, DR2) about the central axis (M) of the cable (1).

4. Method according to one of Claims 1 to 3, also comprising the following step:
displacing the first and/or the second laser beam (17, 18) by a second length (L2) in the longitudinal direction (X) of the cable (1).

5. Method according to one of Claims 1 to 4, in which the first and/or the second direction of rotation (DR1) runs in the same direction as the laser beam direction (R) when the layer (4, 6, 8) comprises a plastic, and runs in the opposite direction to the laser beam direction (R) when the layer (4, 6, 8) comprises a metal, wherein the second direction of rotation (DR2) is preferably counter to the first direction of rotation (DR1) .

6. Method according to one of Claims 1 to 5, in which the cable is a µ coaxial cable.

7. Device for cutting and/or removing layers of a cable (1), wherein the cable (1) has at least one inner conductor (2), a first layer (4), which surrounds the inner conductor (2), a second layer (6), which surrounds the first layer (4), and a third layer (8), which surrounds the second layer (6) and is exposed towards the outside, having:
a laser (10, 14) for generating a first laser beam (17);
at least one laser beam source (16), which is configured to provide the first laser beam (17) such that the first laser beam (17) can be aligned in a plane (Y-Z) perpendicular and transverse to a central axis (M) of the cable (1) and at a distance from an outer side of the cable (1), and can be displaced in the direction of the central axis (M) of the cable (1);
a cable holding device for rotating the cable (1), while the first laser beam (17) is being displaced, in a first direction of rotation (DR1) about the central axis (M) of the cable (1); wherein
the first laser beam (17) has a high degree of absorption in a plastics layer and a low degree of absorption in a metal layer, or a high degree of absorption in a metal layer and a low degree of absorption in a plastics layer.

8. Device according to Claim 7, in which the laser (10, 14) comprises a first laser (10) or a third laser (14), in particular an ultrashort-pulse laser, with a first alignment.

9. Device according to Claim 8, furthermore having a second laser (12), or the third laser (14) with a second alignment, for generating a second laser beam (18), wherein the second laser beam (18) can be aligned and displaced like the first laser beam (17) and has opposite degrees of absorption to the first laser beam (17).

10. Device according to one of Claims 7 to 9, in which the laser beam source (16) has an optical unit with a processing head or a scanner head, wherein the optical unit is also configured such that the laser beam (17, 18) can be displaced along the central axis (M) of the cable (1) .

## Revendications

1. Procédé permettant de couper et/ou d'enlever des couches d'un câble (1), dans lequel le câble (1) présente au moins un conducteur intérieur (2), une première couche (4) entourant le conducteur intérieur (2), une deuxième couche (6) entourant la première couche (4) et une troisième couche (8) entourant la deuxième couche (6) et étant exposée à l'extérieur, et dans lequel le procédé présente les étapes suivantes consistant à :
générer un premier faisceau laser (17) ;
aligner le premier faisceau laser (17) dans un plan (Y-Z) perpendiculaire et transversal à un axe médian (M) du câble (1) de sorte que le premier faisceau laser (17) forme dans le plan (Y-Z) une droite passante par le câble (1) ;
décaler le premier faisceau laser (17) d'une première longueur (L1) en direction de l'axe médian (M) du câble (1) jusqu'à un premier point limite de couche (P1) entre la troisième et la deuxième couche (8, 6), dans lequel le premier faisceau laser (17) présente une absorption élevée dans la troisième couche (8) et une absorption faible dans la deuxième couche (6) ; et
faire tourner le câble (1) pendant l'étape de décalage du premier faisceau laser (17) dans un premier sens de rotation (DR1) autour de l'axe médian (M) du câble (1).

2. Procédé selon la revendication 1, suite aux étapes précédentes, présentant en outre les étapes consistant à :
générer un deuxième faisceau laser (18) ;
aligner le deuxième faisceau laser (18) selon le premier faisceau laser (17) sur le premier point limite de couche (P1) ;
décaler le deuxième faisceau laser (18) en direction de l'axe médian (M) du câble (1) jusqu'à un autre point limite de couche entre la deuxième couche (6) et la première couche (4), dans lequel le deuxième faisceau laser (18) présente une absorption élevée dans la deuxième couche (6) et une absorption faible dans la première couche (4) ; et
faire tourner le câble (1) pendant l'étape de décalage du deuxième faisceau laser (18) dans le premier ou un deuxième sens de rotation (DR1, DR2) autour de l'axe médian (M) du câble (1).

3. Procédé selon la revendication 2, suite aux étapes précédentes, présentant en outre les étapes consistant à :
générer le premier faisceau laser (17) ;
aligner le premier faisceau laser (17) selon le deuxième faisceau laser (18) sur l'autre point limite de couche ;
décaler le premier faisceau laser (17) en direction de l'axe médian (M) du câble (1) jusqu'à un point limite de couche intérieur entre la première couche (4) et le conducteur intérieur (2), dans lequel le premier faisceau laser (17) présente une absorption élevée dans la première couche (4) et une absorption faible dans le conducteur intérieur (2) ; et
faire tourner le câble (1) pendant l'étape de décalage du premier faisceau laser (17) dans le premier ou le deuxième sens de rotation (DR1, DR2) autour de l'axe médian (M) du câble (1).

4. Procédé selon l'une quelconque des revendications 1 à 3, présentant en outre l'étape consistant à :
décaler le premier et/ou le deuxième faisceau laser (17, 18) d'une deuxième longueur (L2) dans la direction longitudinale (X) du câble (1).

5. Procédé selon l'une quelconque des revendications 1 à 4, dans lequel le premier et/ou le deuxième sens de rotation (DR1) s'étendent dans le même sens qu'une direction de faisceau laser (R) si la couche (4, 6, 8) présente une matière plastique, et s'étend à contresens de la direction de faisceau laser (R) si la couche (4, 6, 8) présente un métal, dans lequel le deuxième sens de rotation (DR2) est de préférence opposé au premier sens de rotation (DR1).

6. Procédé selon l'une quelconque des revendications 1 à 5, dans lequel le câble est un câble coaxial micro.

7. Dispositif permettant de couper et/ou d'enlever des couches d'un câble (1), dans lequel le câble (1) présente au moins un conducteur intérieur (2), une première couche (4) entourant le conducteur intérieur (2), une deuxième couche (6) entourant la première couche (4), et une troisième couche (8) entourant la deuxième couche (6) et étant exposée à l'extérieur, présentant :
un laser (10, 14) pour générer un premier faisceau laser (17) ;
au moins une source de faisceau laser (16) qui est aménagée pour fournir le premier faisceau laser (17) de telle sorte que le premier faisceau laser (17) peut être aligné dans un plan (Y-Z) perpendiculaire et transversal à un axe médian (M) du câble (1) à distance d'une face extérieure du câble (1) et peut être décalé en direction de l'axe médian (M) du câble (1) ;
un dispositif de support de câble pour faire tourner le câble (1) pendant le décalage du premier faisceau laser (17) dans un premier sens de rotation (DR1) autour de l'axe médian (M) du câble (1) ; dans lequel
le premier faisceau laser (17) présente un degré d'absorption élevé dans une couche de matière plastique et un degré d'absorption faible dans une couche métallique, ou un degré d'absorption élevé dans une couche métallique et un degré d'absorption faible dans une couche de matière plastique.

8. Dispositif selon la revendication 7, dans lequel le laser (10, 14) présente un premier laser (10) ou un troisième laser (14), en particulier un laser à impulsions ultracourtes, ayant un premier réglage.

9. Dispositif selon la revendication 8, présentant en outre un deuxième laser (12) ou le troisième laser (14) ayant un deuxième réglage pour générer un deuxième faisceau laser (18), dans lequel le deuxième faisceau laser (18) peut être aligné et décalé comme le premier faisceau laser (17) et présente des degrés d'absorption inversés par rapport au premier faisceau laser (17).

10. Dispositif selon l'une quelconque des revendications 7 à 9, dans lequel la source de faisceau laser (16) présente une optique munie d'une tête de traitement, dans lequel l'optique est en outre agencée de telle sorte que le faisceau laser (17, 18) peut être décalé le long de l'axe médian (M) du câble (1).
